# EUROPÄISCHE PATENTSCHRIFT

(11) **EP 0 886 355 B1**
(45) Veröffentlichungstag und Bekanntmachung des Hinweises auf die Patenterteilung: **31.10.2001**
(21) Anmeldenummer: 98250217.1
(22) Anmeldetag: 17.06.1998
(51) Int. Cl.: H02B 11/133, H01H 9/22

(54) **Verriegelung für das Bedienpult eines Niederspannungs-Leistungsschalters**
Locking arrangement for the operating panel of a low voltage, power switch
Verrouillage pour le panneau de commande d'un interrupteur de puissance à basse tension

(30) Priorität: 20.06.1997 DE 19727695
(43) Veröffentlichungstag der Anmeldung: 23.12.1998
(73) Patentinhaber: SIEMENS AKTIENGESELLSCHAFT, 80333 München (DE)
(72) Erfinder: Liebetruth, Marc, 13465 Berlin (DE); Godesa, Ludvik, 10777 Berlin (DE)

(56) Entgegenhaltungen:
- EP-A- 0 685 913
- DE-B- 1 082 327
- US-A- 2 512 505
- US-A- 3 288 956
- US-A- 5 609 244

## Beschreibung

Die Erfindung betrifft einen Niederspannungs-Leistungsschalter mit einem abnehmbaren Bedienpult, wobei im Bedienpult eine Anzeigeöffnung für einen von der Schaltstellung zwangsläufig abhängigen Anzeigehebel angeordnet ist.

Ein Niederspannungs-Leistungsschalter der genannten Art ist unter anderem in der EP 0 685 913 A2 beschrieben. Durch die Abnehmbarkeit des Bedienpultes erhält ein Benutzer einerseits Zugang zu auswechselbaren oder der Wartung unterliegenden Teilen. Andererseits ist eine Bedienungsperson oder ein Wartungsmechaniker bei abgenommenem Bedienpult einer Verletzungsgefahr durch offen berührbare mechanische Elemente sowie möglicherweise durch heiße Schaltgase oder Lichtbogenausläufer ausgesetzt, wenn der Schalter unerwartet ausgelöst wird.

Der Erfindung liegt somit das Problem zugrunde, eine Verletzungsgefahr eines Benutzers zu vermeiden und zu verhindern, daß das Bedienpult eines in Betrieb befindlichen Niederspannungs-Leistungsschalters demontiert werden kann.

Dieses Problem wird erfindungsgemäß dadurch gelöst, dass als Sicherung gegen unerlaubtes oder ungewolltes Demontieren des Bedienpultes bei in Betrieb befindlichem, insbesondere eingeschaltetem Leistungsschalter hinter der Anzeigeöffnung im Bedienpult ein Sperrsteg angeordnet ist, und daß der Anzeigehebel in der Stellung "EIN" hakenartig hinter diesen Sperrsteg greift. Damit ist eine zwangsläufige Sicherung des Bedienpultes gegen eine Abnahme oder Demontage bei eingeschaltetem Leistungsschalter geschaffen.

Es erweist sich als zweckmäßig, wenn der Sperrsteg zusammen mit der Anzeigeöffnung einstückig mit dem Bedienpult hergestellt ist, wobei auf dem Sperrsteg eine Markierung "AUS" angebracht ist und der Anzeigehebel lediglich die Markierung "EIN" trägt.

Ferner empfiehlt es sich im Rahmen der Erfindung, dass die Öse am Bedienpult mechanisch relativ zum Anzeigehebel schwächer ausgebildet ist. Hierdurch wird eine Sollbruchstelle an der Öse geschaffen, damit bei einer Fehlbedienung in Form einer ungewollten oder unerlaubten Demontage des Bedienpultes nicht der Anzeigehebel beschädigt wird, der verhältnismäßig schwer austauschbar ist.

Durch das Hintergreifen des Sperrsteges durch den mit der Schaltwelle zwangsläufig gekuppelten Anzeigehebel wird die Abnahme des Bedienpultes in der gewünschten Weise verhindert. In sinngemäß der gleichen Weise wird verhindert, dass das Bedienpult in der Schaltstellung "EIN" des Leistungsschalters an diesem montiert werden kann. Zur gewünschten Sicherheit bei der Handhabung kann dadurch beigetragen werden, dass der mit einer Schaltwelle des Leistungsschalters durch ein Kraftübertragungselement direkt gekoppelte Anzeigehebel als Schwenkhaken derart ausgebildet ist, daß beim Versuch der Demontage des Bedienpultes im verriegelten Zustand die Abnahmekräfte kein Drehmoment auf den Anzeigehebel und damit auf die Schaltwelle ausüben, und die Wirkung dieser Kräfte durch das Zentrum der Lagerung des Anzeigehebels verläuft.

Zur Erhöhung der Schutzart des Leistungsschalters kann die Anzeigeöffnung durch eine transparente Abdeckung verschlossen werden, die vorzugsweise mittels federnder Rasthaken einrastbar ist. Sie kann aber auch einschraubbar oder mittels einer Bajonettverbindung einsetzbar ausgeführt sein.

An der Nabe des Anzeigehebels kann eine Hilfsbeschriftung "AUS" angebracht sein, damit bei abgenommenem Bedienpult diese Schaltstellung erkennbar ist. Zweckmäßig ist diese Hilfsanzeige mittels Farbe aufgespritzt, um zu vermeiden, daß eine aufgeklebte Anzeige sich löst und verlorengeht.

Es sind bereits bei Niederspannungs-Leistungsschaltern oder ähnlichen Schaltgeräten von der Schaltstellung abhängige Verriegelungen bekannt. Beispiele hierfür zeigen die US 3 288 956 A bei einem handbetätigten Lastschalter mit Schmelzsicherungen und die DE 1 082 327 B bei einer Mittelspannungs-Schaltwagenanlage. Hierbei handelt es sich jedoch um fahrbar angeordnete Leistungsschalter bzw. Einschubschalter, bei denen zur Sicherheit des Benutzers das Verfahren nur im ausgeschalteten Zustand möglich sein soll. Ferner kann nach der US 5 609 244 A die seitliche Tür eines Kapselungsgehäuses eines Hauptschalters in Abhängigkeit von der Schaltstellung des Hauptschalters verriegelt werden.

Die Schaltgeräte nach den vorstehend genannten Dokumenten weisen zwar Bedienpulte oder sinngemäße Teile auf, besitzen aber keine Einrichtungen, um diese Teile in Abhängigkeit von der Schaltstellung der bettreffenden Schaltgeräte gegen Demontage zu sichern.

Die Erfindung wird nachfolgend anhand eines in den Figuren dargestellten bevorzugten Ausführungsbeispiels näher erläutert.

Die Figur 1 zeigt schematisch die Schaltstellungsanzeige eines Niederspannungs-Leistungsschalters mit der erfindungsgemäßen Verriegelungsfunktion im eingeschalteten Zustand des Leistungsschalters.

Die Figur 2 zeigt schematisch die Schaltstellungsanzeige eines Niederspannungs-Leistungsschalters mit der erfindungsgemäßen Verriegelungsfunktion im ausgeschalteten Zustand des Leistungsschalters.

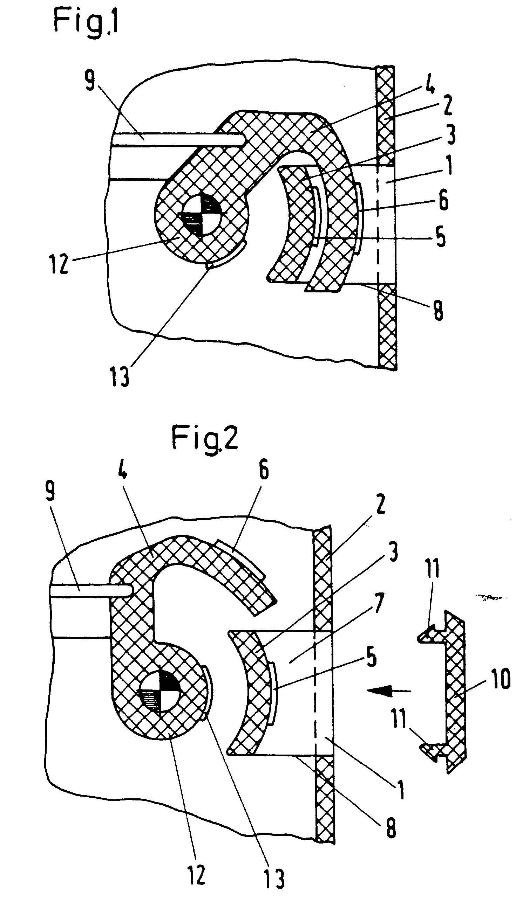

In der Figur 1 ist die Schaltstellungsanzeige eines Niederspannungs-Leistungsschalters mit der erfindungsgemäßen Verriegelungsfunktion im eingeschalteten Zustand des Leistungsschalters dargestellt, in der eine Demontage des Bedienpultes nicht möglich ist. Das wird dadurch erreicht, daß hinter der Anzeigeöffnung 1 im Bedienpult 2 ein Sperrsteg 3 angeordnet ist, und daß der Anzeigehebel 4 in der Stellung "EIN" hakenartig hinter diesen Sperrsteg 3 greift. Zweckmäßig ist der Sperrsteg 3 zusammen mit der Anzeigeöffnung 1 einstückig mit dem Bedienpult 2 hergestellt. Auf dem Sperrsteg 3 ist eine Markierung "AUS" 5 angebracht. Der Anzeigehebel 4 trägt lediglich die Markierung "EIN" 6.

Die Öse 7, die durch den Sperrsteg 3 und dessen Seitenteile 8 am Bedienpult 2 gebildet wird, ist mechanisch relativ zum Anzeigehebel 4 schwächer ausgebildet. Hierdurch wird eine Sollbruchstelle an der Öse 7 geschaffen, damit bei einer Fehlbedienung nicht der Anzeigehebel 4 beschädigt wird, der verhältnismäßig schwer austauschbar ist.

Durch das Hintergreifen des Sperrsteges 3 durch den mit der nicht dargestellten Schaltwelle mittels eines Kraftübertragungselementes 9 zwangsläufig gekoppelten Anzeigehebel 4 wird die Abnahme des Bedienpultes 2 in der gewünschten Weise verhindert.

Der mit der nicht dargestellten Schaltwelle mittels des Kraftübertragungselementes 9 direkt gekoppelte Anzeigehebel 4 ist als Schwenkhaken so ausgebildet, daß beim Versuch der ungewollten bzw. unerlaubten Demontage des Bedienpultes 2 die Abnahmekräfte kein Drehmoment auf den Anzeigehebel 4 und damit auf die Schaltwelle ausüben, weil die Wirkung dieser Kräfte durch das Zentrum der Lagerung des Anzeigehebels 4 verläuft.

Zur Erhöhung der Schutzart des Leistungsschalters kann die Anzeigeöffnung 1 im Bedienpult 2 durch eine transparente Abdeckung 10 verschlossen werden, die mittels federnder Rasthaken 11 in die Anzeigeöffnung 1 einrastbar ist.

In der Figur 2 ist die Schaltstellungsanzeige eines Niederspannungs-Leistungsschalters mit der erfindungsgemäßen Verriegelungsfunktion im ausgeschalteten Zustand des Leistungsschalters dargestellt, in der sich der Anzeigehebel 4 mit dem Sperrsteg 3 nicht im Eingriff befindet, wodurch eine Demontage des Bedienpultes 2 möglich ist.

An der Nabe 12 des Anzeigehebels 4 ist eine Hilfsbeschriftung "AUS" 13 angebracht, damit bei abgenommenem Bedienpult 2 diese Schaltstellung erkennbar ist. Zweckmäßig ist diese Hilfsbeschriftung 13 mittels Farbe aufgespritzt, um zu vermeiden, daß eine aufgeklebte Anzeige sich löst und verlorengeht.

Die Vorteile der Erfindung bestehen darin, daß die Sicherheit des Benutzers gegen eine Verletzung durch bei Schaltbewegungen des Leistungsschalters mechanisch bewegte Teile, die bei abgenommenem Bedienpult zugängig sind oder durch heiße Lichtbogengase, die durch die Öffnung des demontierten Bedienpultes austreten können, wesentlich verbessert wird.

## Patentansprüche

1. Niederspannungs-Leistungsschalter mit einem abnehmbaren Bedienpult, wobei im Bedienpult eine Anzeigeöffnung für einen von der Schaltstellung zwangsläufig abhängigen Anzeigehebel angeordnet ist,
**dadurch gekennzeichnet, dass** als Sicherung gegen unerlaubtes oder ungewolltes Demontieren des Bedienpultes bei in Betrieb befindlichem, insbesondere eingeschaltetem Leistungsschalter hinter der Anzeigeöffnung (1) im Bedienpult (2) ein Sperrsteg (3) angeordnet ist, und daß der Anzeigehebel (4) in der Stellung "EIN" hakenartig hinter diesen Sperrsteg (3) greift.

2. Niederspannungs-Leistungsschalter nach Anspruch 1,
**dadurch gekennzeichnet, dass** der Sperrsteg (3) zusammen mit der Anzeigeöffnung (1) einstückig mit dem Bedienpult (2) hergestellt ist, wobei auf dem Sperrsteg (3) eine Markierung "AUS" (5) angebracht ist und der Anzeigehebel (4) lediglich die Markierung "EIN" (6) trägt.

3. Niederspannungs-Leistungsschalter nach Anspruch 1 oder 2,
**dadurch gekennzeichnet , dass** die Öse (7), die durch den Sperrsteg (3) und dessen Seitenteile (8) am Bedienpult (2) gebildet ist, mechanisch relativ zum Anzeigehebel (4) schwächer ausgebildet ist.

4. Niederspannungs-Leistungsschalter nach einem der vorangehenden Ansprüche,
**dadurch gekennzeichnet, dass** der mit einer Schaltwelle des Leistungsschalters durch ein Kraftübertragungselelent (9) direkt gekoppelte Anzeigehebel (4) als Schwenkhaken derart ausgebildet ist, daß beim Versuch der Demontage des Bedienpultes (2) im verriegelten Zustand die Abnahmekräfte kein Drehmoment auf den Anzeigehebel (4) und damit auf die Schaltwelle ausüben, und die Wirkung dieser Kräfte durch das Zentrum der Lagerung des Anzeigehebels (4) verläuft.

5. Niederspannungs-Leistungsschalter nach einem der vorangehenden Ansprüche,
**dadurch gekennzeichnet, daß** zur Erhöhung der Schutzart des Leistungsschalters die Anzeigeöffnung (1) im Bedienpult (2) durch eine transparente Abdeckung (10) verschlossen ist, daß die mittels federnder Rasthaken (11) in die Anzeigeöffnung (1) einrastbar ist.

6. Niederspannungs-Leistungsschalter nach Anspruch 5,
**dadurch gekennzeichnet, daß** die Abdekkung (10) in die Anzeigeöffnung (1) einschraubbar oder mittels einer Bajonettverbindung einsetzbar ist.

7. Niederspannungs-Leistungsschalter nach Anspruch 1,
**dadurch gekennzeichnet, daß** zum Erkennen der Schaltstellung des Leistungsschalters bei abgenommenem Bedienpult (2) an einer Nabe (12) des Anzeigehebels (4) eine Hilfsbeschriftung (13) angebracht ist.

## Claims

1. Low-voltage circuit breaker having a removable control panel, with an indication opening for an indication lever which is necessarily dependent on the switch position being arranged in the control panel,
**characterized in that**, as protection against unallowed or accidental removal of the control panel when the circuit breaker is in use, in particular when it is connected, a locking web (3) is arranged behind the indication opening (1) in the control panel (2), and **in that** the indication lever (4) engages behind this locking web (3), like a hook, in the "ON" position.

2. Low-voltage circuit breaker according to Claim 1,
**characterized in that** the locking web (3) is produced together with the indication opening (1) integrally with the control panel (2), with a marking "OFF" (5) being applied to the locking web (3) and the indication lever (4) having only the marking "ON" (6).

3. Low-voltage circuit breaker according to Claim 1 or 2,
**characterized in that** the eye (7) which is formed by the locking web (3) and its side parts (8) on the control panel (2) is designed to be mechanically weaker than the indication lever (4).

4. Low-voltage circuit breaker according to one of the preceding claims,
**characterized in that** the indication lever (4), which is coupled directly to one operating shaft of the circuit breaker by means of a force transmission element (9), is designed as a pivoting hook in such a manner that, if an attempt is made to remove the control panel (2) when it is in the locked state, the removal forces do not exert any torque on the indication lever (4) and hence on the operating shaft, and the effect of these forces runs through the centre of the bearing of the indication lever (4).

5. Low-voltage circuit breaker according to one of the preceding claims,
**characterized in that**, in order to increase the protection class of the circuit breaker, the indication opening (1) in the control panel (2) is sealed by means of a transparent cover (10), which can be latched into the indication opening (1) by means of sprung latching hooks (11).

6. Low-voltage circuit breaker according to Claim 5,
**characterized in that** the cover (10) can be screwed into the indication opening (1), or can be inserted into it by means of a bayonet connection.

7. Low-voltage circuit breaker according to Claim 1,
**characterized in that**, in order to identify the switch position of the circuit breaker when the control panel (2) is removed, an auxiliary inscription (13) is applied to a hub (12) of the indication lever (4).

## Revendications

1. Interrupteur de puissance à basse tension, comprenant un panneau de commande amovible, une ouverture indicatrice pour un levier indicateur dépendant nécessairement de la position de l'interrupteur étant prévue dans le panneau de commande,
**caractérisé en ce qu'**il est prévu comme sécurité vis à vis d'un démontage non autorisé ou intempestif du panneau de commande, lorsque l'interrupteur de puissance se trouve en fonctionnement et est notamment fermé, derrière l'ouverture (1) indicatrice dans le panneau (2) de commande, une réglette (3) de blocage et **en ce que** le levier (4) indicateur s'accroche dans la position "FERME" à la manière d'un crochet derrière cette réglette (3) de blocage.

2. Interrupteur de puissance à basse tension suivant la revendication 1, **caractérisé en ce que** la réglette (3) de blocage est fabriquée en même temps que l'ouverture (1) indicatrice d'une pièce avec le panneau (2) de commande, un repère "OUVERT" (5) étant ménagé sur la réglette (3) de blocage, tandis que le levier (4) indicateur porte seulement le repère "FERME" (6).

3. Interrupteur de puissance à basse tension suivant la revendication 1 ou 2, **caractérisé en ce que** l'oeillet (7) formé par la réglette (3) de blocage et ses parties (8) latérales sur le panneau (2) de commande est mécaniquement plus faible que le levier (4) indicateur.

4. Interrupteur de puissance à basse tension suivant l'une des revendications précédentes, **caractérisé en ce que** le levier (4) indicateur couplé directement à un arbre de l'interrupteur de puissance par un élément (9) de transmission de forces est constitué en crochet basculant, de sorte que, si l'on essaie de démonter le panneau (2) de commande à l'état verrouillé, les forces destinées à l'enlever n'appliquent pas de couple de rotation au levier (4) indicateur et ainsi à l'arbre de l'interrupteur et la direction de ces forces passe par le centre du support du levier (4) indicateur.

5. Interrupteur de puissance à basse tension suivant l'une des revendications précédentes, **caractérisé en ce que** pour augmenter le type de protection de l'interrupteur de puissance, l'ouverture (1) indicatrice, ménagée dans le panneau (2) de commande est fermée par un couvercle (10) transparent qui peut être encliqueté au moyen de crochets (11) d'encliquetage élastique dans l'ouverture (1) d'indication.

6. Interrupteur de puissance à basse tension suivant la revendication 5, **caractérisé en ce que** le couvercle (10) peut être vissé dans l'ouverture (1) d'indication ou peut être monté au moyen d'une liaison à baïonnette.

7. Interrupteur de puissance à basse tension suivant la revendication 1, **caractérisé en ce que** pour reconnaître la position de l'interrupteur de puissance alors que le panneau (2) de commande est enlevé, il est apposé sur un moyeu (12) du levier (4) indicateur, une inscription (13) auxiliaire.
